# EUROPEAN PATENT SPECIFICATION

(11) **EP 3 914 061 B1**
(45) Date of publication and mention of the grant of the patent: **01.05.2024**
(21) Application number: 20704184.9
(22) Date of filing: 21.01.2020
(51) Int. Cl.: A01B 3/36, A01B 3/42, A01B 69/00, A01B 71/00, A01B 71/06

(54) **A METHOD FOR PLOUGHING FARMLAND AND AN AUTONOMOUS TRACTOR FOR EMPLOYING THE METHOD**
EIN VERFAHREN ZUM PFLÜGEN VON ACKERLAND UND EIN AUTONOMER TRAKTOR ZUR ANWENDUNG DES VERFAHRENS
UNE MÉTHODE DE TRAVAIL DES TERRES AGRICOLES ET UN TRACTEUR AUTONOME POUR L'APPLICATION DE CETTE MÉTHODE

(30) Priority: 22.01.2019 NL 2022429
(43) Date of publication of application: 01.12.2021
(73) Proprietor: AgXeed Holding B.V., 5971 NG Grubbenvorst (NL)
(72) Inventor: HIDDEMA, Joris Jan, 5971 DL Grubbenvorst (NL); SCHMITZ, Laurentius Hubertus Margaretha, 6105 AX Mariahoop (NL)
(74) Representative: Janssen, Paulus J. P.
(86) International application number: PCT/EP2020/051333
(87) International publication number: WO 2020/152123

(56) References cited:
- EP-A1- 0 181 947
- EP-A1- 0 807 373
- EP-A2- 1 082 887
- BE-A- 513 503
- FR-A2- 2 372 581
- GB-A- 1 592 398
- GB-A- 2 321 378
- GB-A- 2 468 123
- JP-A- 2001 045 801

## Description

### GENERAL FIELD OF THE INVENTION

The present invention pertains in general to a method for ploughing farmland, using a tractor and connected thereto a swivel plough comprising a first and a second mouldboard, extending in parallel and positioned on opposite sides of a common axle.

### BACKGROUND ART

Ploughing is an indispensable technique in the art of cultivating farmland. A plough is a tool used for initial cultivation of soil in preparation for sowing seed or planting to loosen or turn the soil. Ploughs were traditionally drawn by working animals such as oxen and horses, but in modern times are mostly drawn by tractors. A plough may be made of wood, iron, or steel frame with an attached blade or stick used to cut the soil and loosen it. It has been a basic instrument for most of recorded history, although despite archeological evidence for its use written references to the plough do not appear in the English language before c. 1100, after which point it is referenced frequently.

A major advance in the art of ploughing was the introduction of the turnplough, also known as the mouldboard plough or frame-plough. The mouldboard plough was introduced in the 18th century and was a major advance in plough technology.

Nowadays in highly automated farmland cultivation, the most common type of plough is yet a further improvement, the so called swivel plough (or reversible plough, or rollover plough). Commonly, this type of plough has two mouldboard ploughs mounted back-to-back, one turning to the right, the other to the left. While one is working the land, the other is carried upside-down in the air. At the end of each row, the paired ploughs are turned over, so the other can be used. This returns along the next furrow, again working the field in a consistent direction. These ploughs already date back to the days of the steam engine and the horse. In almost universal use on farms, they have right- and lefthanded mouldboards enabling them to work up and down the same furrow. Swivel ploughs may either be mounted or semi-mounted and are heavier and more expensive than right-handed models, but they have the great advantage of leaving a level surface which makes seedbed preparation and harvesting easier. Very little marking out is necessary before ploughing can start and idle running on the headland is minimal compared with conventional ploughs.

Driving the tractor with the furrow-side wheels in the furrow bottom provides the most efficient line of draft between tractor and plough. It is also easier to steer the tractor and driving with the front wheel against the furrow wall will keep the front furrow at the correct width. This is less satisfactory when using a tractor with very wide front tyres, for although they make better use of the tractor power, the tyres may compact part of the last furrow slice turned on the previous run. The use of furrow widener or a longer mouldboard on the rear body may overcome the problem. The latter moves the soil further towards the ploughed land leaving more room for the tractor wheels on the next run. Driving with all four wheels on unploughed land is another solution to the problem of wide tyres. Semi-mounted ploughs can be hitched in a way that allows the tractor to run on unbroken land and pull the plough in correct alignment without any sideways movement (crabbing).

Downside of the swivel ploughs is that they are heavy and thus their use needs heavy tractors. Correspondingly, there are heavy mechanical burdens on the construction of the plough itself as well as the tractor since the plough must be able to be revolved while being lifted in the air extending from the tractor over its full length. All in all, this has led to machinery with increased weight, and the corresponding risk of compacting the land against the aim of loosening it.

GB 2468123 describes an autonomous tractor with a swivel plough for a use as described here above, including turning the paired boards over at the end of each furrow.

### OBJECT OF THE INVENTION

It is an object to provide an improved method of ploughing.

### SUMMARY OF THE INVENTION

In order to meet the object of the invention the ploughing method as known from the art and described here above, comprising crossing the farmland with the tractor and swivel plough connected thereto along a line that extends in a longitudinal direction from a first location on the farmland to a second location on the farmland, while the first mouldboard is in contact with the farmland to turn its soil, and the second mouldboard is raised above the farmland, adjacent the second location, lifting the swivel plough such that the first mouldboard is raised above the farmland and thereafter rotating the swivel plough around the axle to bring the second mouldboard in the position the first mouldboard had relative to the tractor when crossing the farmland from the first location to the second location, crossing the farmland with the tractor and swivel plough connected thereto adjacent the said line, moving in opposite direction (i.e. in essence from the second location to the first location), while the second mouldboard is in contact with the farmland to turn its soil, and the first mouldboard is raised above the farmland, has been improved wherein the tractor is an autonomous tractor and that the swivel plough is rotated when the axle is in an upright position.

It was applicant's recognition that using an autonomous tractor, i.e. a tractor that does not need continuous control of a human operator sitting in a cabin on top of the tractor, the existing method can be markedly improved. The autonomous tractor allows that a cab can be dispensed with altogether. This on its turn means that the rotating action of the swivel plough can take place right above the tractor, by putting the axle in an upright position, instead of behind the tractor. This not only increase safety significantly (the plough does no longer extend over its full length from the tractor while being rotated, thus markedly decreasing its footprint during this rotating action), but also, the mechanical constraints on both the plough and the tractor are substantially less. This also has the consequence that the complete combination of tractor and plough can be produced at less weight, therewith decreasing the risk of land compacting.

Although autonomous tractors are known in the art, it was applicant's recognition that especially in the art of ploughing, in particular using a swivel plough, an autonomous tractor can be significant advantages as indicated here above. The invention is therefore also embodied in an autonomous tractor for autonomously crossing farmland, the tractor comprising connected thereto a swivel plough comprising a first and a second mouldboard, extending in parallel and positioned on opposite sites on the same axle, the tractor being arranged for lifting the swivel plough and rotating the swivel plough around its axle to switch the position of the second mouldboard with that of the first mouldboard, characterised in that the tractor is an autonomous tractor and that the swivel is rotated when the axle is in an upright position.

### DEFINITIONS

A *tractor* is an agricultural vehicle that is used to pull agricultural machinery and to provide the energy needed for the machinery to cultivate the land (including any harvesting action). It commonly but not necessarily is a powerful vehicle with a gasoline or diesel engine and large rear wheels or endless belt tracks (so called caterpillar tracks).

An *autonomous* tractor is a tractor that can automatically perceive its environment, make decisions based on what it perceives and recognizes and then actuate a movement or manipulation within that environment. These decision-based actions include but are not limited to starting, stopping, and maneuvering around obstacles that are in its way. Such a tractor can cross farmland without needing continuous control of a human operator, and when an agricultural machine is operatively connected to the tractor, it can autonomously cultivate the land.

An *axis* is an assembly representing an imaginary straight line passing through the center of a solid, about which a figure can be conceived as rotating to generate the solid. In practice, an axle (i.e. a rod, spindle, bar, shaft or assembly acting as such) is the item passing through the center of the solid, which solid may for example be an agricultural machine such as a plough.

A *swivel plough,* also called a 180° swivel plough, in essence consists of two mouldboards positioned one above the other and opposite by 180° on the same axle (although the exact angle is not essential for such a plough as long as one plough can be put in a ploughing position while the other can be raised above the ground). The two mouldboards work alternately: when one is working the other is raised relative to the ground surface. The swivel plough allows the turning of the soil to the right or to the left relative to the movement. To change the direction of turning, at the end of the field the plough is rotated around its axle to make a rotation of the plough to be able and put the other mouldboard in its working position.

A *line* is a path that extends between a first and second location.

An *upright* position of an item means that the item is raised such that it extends in essence vertically (i.e. at an angle between 60 and 120°, typically about between 70 and 110°, for example 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109 or 110°).

A *road haulage truck* is a motor vehicle designed to transport items over the public road, either by pulling the item (if it has wheels for transport over the road) or by carrying the item on a (semi-)trailer. A road haulage truck may for example be a regular human operated tractor, or a truck-trailer combination (the trailer for example being a flatbed trailer).

A *road* is a long narrow stretch with a smoothed or pave hard surface, mad for travelling by motor vehicle, carriage etc. between two or more points. A road is also referred to a street, or (high) way.

*Farmland* is land that is used for or suitable for farming.

A *sensor* is a device that responds to a physical stimulus such as heat, light, sound, pressure, magnetism, or a particular motion, and transmits a resulting impulse, for example for measurement or operating a control.

An *obstacle* is any item that prevents or impedes the free movement of an object in the environment. An obstacle can be a stationary physical item such as a big rock or a river, a movable item such as an animal or human being, but it can also be an imaginary item such as the border or a lot of land.

*Above* means at or to a place that is higher than someone or something.

The *footprint* of an item is the space the item occupies when viewed from above.

A *wheel* of a vehicle is an item arranged to revolve on an axis, such as a common spoked car wheel or a caterpillar track, which is used to convert a rotation (of the axis) into a translation of the vehicle.

A *specification* of a sensor denotes a parameter that is relevant for the capabilities of the sensors to pick up signals and to deliver corresponding output. Typical specifications are the "range", "accuracy", "resolution", "repeatability", "drift", "hysteresis", "stability", "response time", "settling time", "voltage required", "current drawn", "output" and "sensor noise estimation".

*Automatically* means without the need of (human) operator intervention. Automatically does not exclude that something is operator initiated or stopped as long the process can be completed without needing operator intervention.

A *central processing unit* or CPU is an electronic circuitry within a computer system that carries out the instructions of a computer program by performing the basic arithmetic, logic, controlling and input/output (I/O) operations specified by the instructions. The term "CPU" may refer to a tangible (single) processor, more specifically to its processing unit and control unit (CU), but may also refer to multiple processors distributed over a networked system operating as if part of one single processor.

### EMBODIMENTS OF THE INVENTION

In an embodiment of the method according to the invention the swivel plough is rotated when the axle forms an angle with the farmland of between 80 and 100°, for example at 81, 82, 83, 84, 85, 86, 87, 88, 89, 90, 91, 92, 93, 94, 95, 96, 97, 98 or 99°, preferably between 87 and 93°, most preferably about 90°. Keeping the angles close to 90° makes sure that the advantages of the present method can be used to their highest potential.

In a second embodiment of the method according to the invention, the tractor comprises a connector for connecting the tractor to a road haulage truck for transport of the tractor over the road, wherein the direction of movement of the tractor when crossing the farmland is perpendicular to the direction of movement when the tractor is transported over the road. This embodiment is based on the following insights.

To be economically viable, many machines simply need a working width of at least 3 meters. Even stronger, many contemporary machines have working width exceeding 5-6 meters up to even 20 meters or more. This on itself makes such machines unsuitable for transport over the road (the machines are simply too wide), and there is no solution in legislation. This problem is also relevant for an autonomous tractor: many machines simply need to have a working width of at least 3 meters. Present day solution are mostly to devise machines than can be folded in one way or another. However, such machines are complicated and very expensive to build. Applicant recognised that this problem can also be overcome by devising a tractor which has arrangements such that the direction of movement of the tractor when crossing the land is perpendicular to the direction of movement during road transport. This means that when moving along a road, the agricultural machine extends in the transport direction, and thus, the longitudinal direction of the road, which means that there are far less legal restrictions. According to EU regulation for example, the combination of a truck and trailer may have a length up to 18.75 meters which would cover most if not all modern swivel plough lengths. Still, another recognition was needed to arrive at the tractor of the invention: autonomous movement over public roads requires new legislation and is far from being reality. However, to equip the tractor with an option for an operator to be able and drive the tractor would increase cost tremendously and maybe even completely counter the economic advantage of being autonomous. In order to solve this, the inventors recognised that a mechanically simple connector (a drawbar, a fifth wheel connector, a winch etc.) for connecting the tractor to a road haulage truck for transport of the tractor over the road will do the trick: for transport over the public road the tractor is seen as a trailer or cargo and not as a motored vehicle. This in combination with a small width, due to the perpendicular transport direction, makes sure that the tractor according to the invention meets the most important laws and regulations that currently apply in Europe and North America.

In another embodiment the tractor has a first set of wheels corresponding to the movement when crossing the farmland, and a second set of wheels corresponding to transport of the tractor over the road. Although one set of wheels could be used in the tractor of the invention, for example when arranged such that they can pivot such that their axis undergoes a 90° rotation to meet the perpendicular directions of movement, it has been found advantageous to use two sets of wheels, each set corresponding to either the direction of movement when crossing farmland or the direction of transport over the road. In a further embodiment the second set of wheels is arranged to be movable away from the farmland to prevent contact therewith when the tractor crosses the farmland.

In yet another embodiment the tractor comprises one or more sensors for detection of obstacles when crossing the farmland, and a coupler for coupling to the tractor an agricultural machine alternative to the swivel plough. The presence of sensors as such is known form the prior art of autonomous machines. However, applicant realised that it would be advantageous to devise the tractor such that an agricultural machine alternative to the plough can be coupled to the tractor. With this, the inventors go against the long trend of machines getting bigger and more specialised. This is based on the recognition that it may be sufficient for an autonomous tractor to be economically attractive, to be small and versatile: small in the sense that the tractor in principle does not need to be more than a generally applicable device for converting energy into motion ("a motor on wheels"). It does not need to have an integrated means for cultivating the land (such as the large combines and other harvest machines) as along as the tractor is able to be coupled to various different agricultural machines for working the farmland. This means that the present invention allows that the tractor can be kept relatively small. Still, by the fact that the tractor, and hence the agricultural machine operates autonomously, a good return on investment can be obtained (despite its small size) since it can operate up to 24 hours per day, 7 days per week. For a small machine on its turn, current legislation provides far less restrictions.

In again another embodiment, wherein the tractor comprises a central processing unit (CPU) for receiving input signals from the one or more sensors and for controlling the movement of the tractor based on the input signals in order to avoid an obstacle present on the farmland, wherein each of the agricultural machine and the swivel plough comprises one or more additional sensors for detection of the obstacles, the coupling of the agricultural machine or swivel plough comprises operatively connecting the one or more additional sensors to the CPU and automatically providing data to the CPU regarding the location of each of the one or more additional sensors on the agricultural machine or swivel plough and one or more specifications of each of these one or more additional sensors. Applicant recognised that much improvement can be obtained in the area of obstacle sensing. Although it is known in the art, as described here above, to use sensors on an autonomous vehicle for obstacle detection, and also, to use sensors on the part of the tractor that holds the actual cultivating machine (being a part of a specialised tractor), no attention has been given to small versatile tractors that are devised to be coupled with various different agricultural machines. Applicant realised that it is advantageous in such a situation that the coupling of the agricultural machine comprises operatively connecting the sensors of the couple agricultural machine to the CPU of the tractor and automatically providing data to the CPU of this tractor regarding the location of each of the one or more additional sensors on the agricultural machine and one or more specifications of each of these one or more additional sensors. This means that the sensors of the agricultural machine are integrated into the system such that the system as a whole can operate autonomously in the best possible way.

The invention will now be further explained using the following figures. Figures 1-11 exemplify the concept of an autonomous tractor and connected thereto an agricultural machine in general. Figures 12 and 13 relate specifically to tractors and methods for ploughing farmland using a swivel plough.

### EXAMPLES

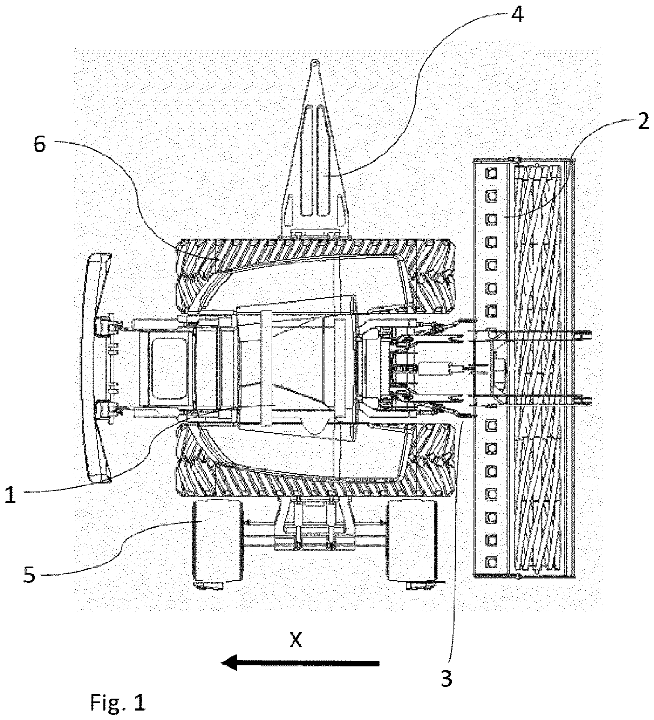

Figure 1 is a schematic top plan view of an autonomous tractor.

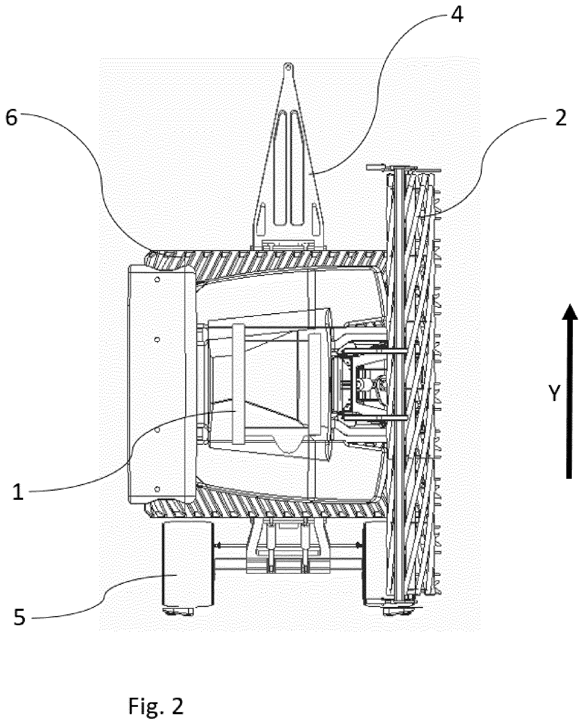

Figure 2 is a schematic top plan view of the autonomous tractor of figure 1 with the agricultural machine in an elevated position.

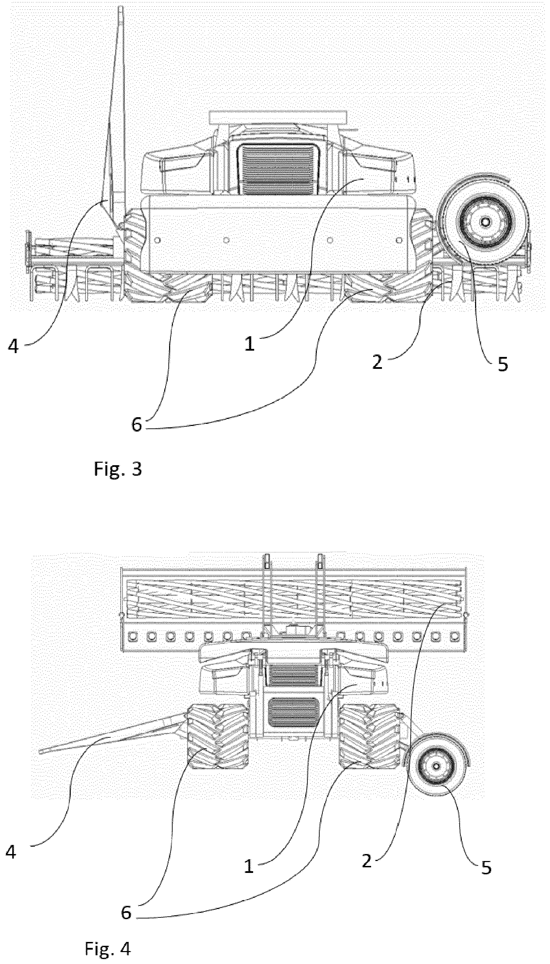

Figure 3 is a schematic side view of the tractor, corresponding to figure 1.
Figure 4 is a schematic side view of the tractor, corresponding to figure 2.

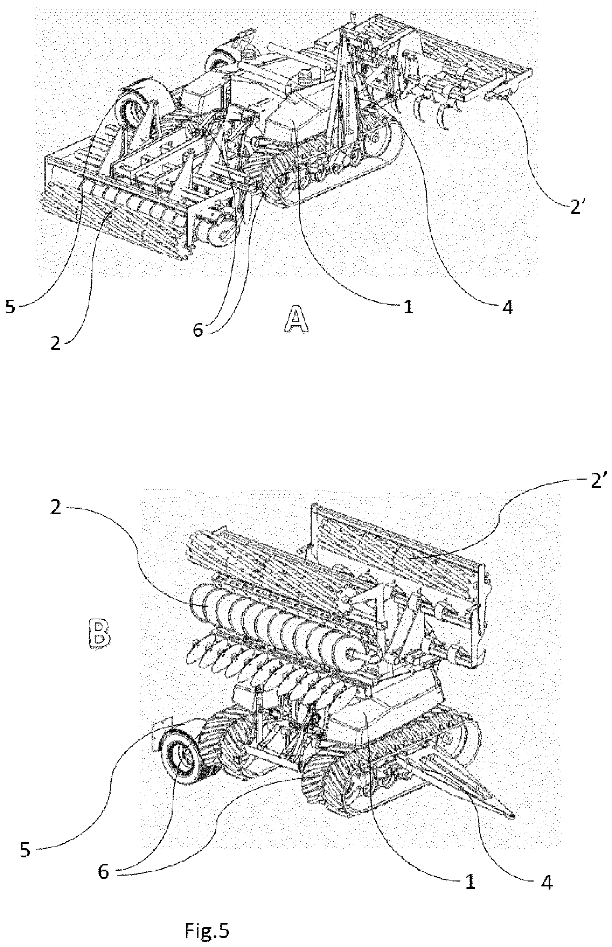

Figure 5 is a schematic view of an alternative autonomous tractor.

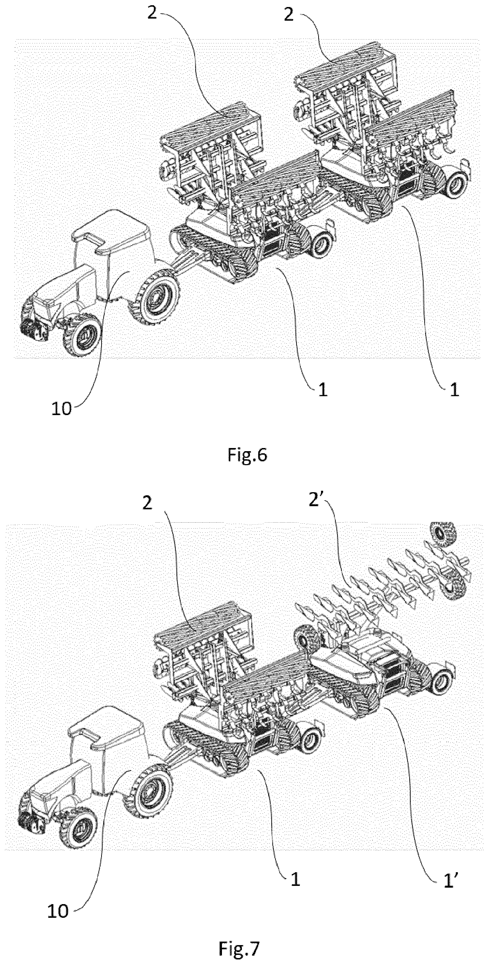

Figure 6 is a schematic view of two autonomous tractors pulled by human operated tractor serving as a road haulage truck for transport over the road.
Figure 7 is a schematic view of an alternative arrangement of the combination as shown in figure 6.

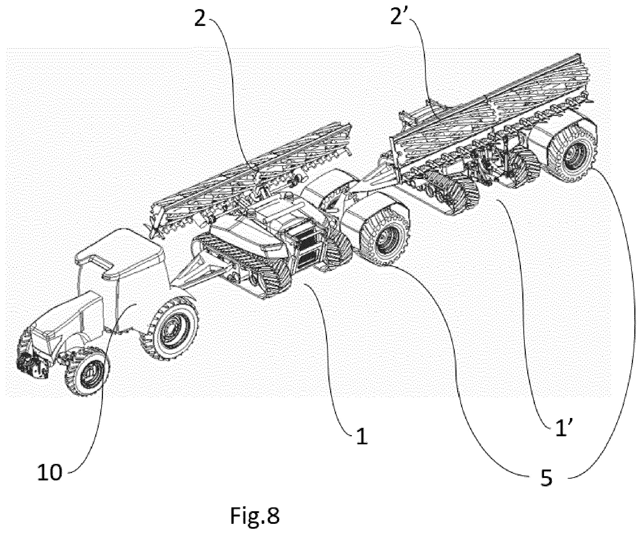

Figure 8 is a schematic view of a further alternative arrangement of the combination as shown in figures 6 and 7.

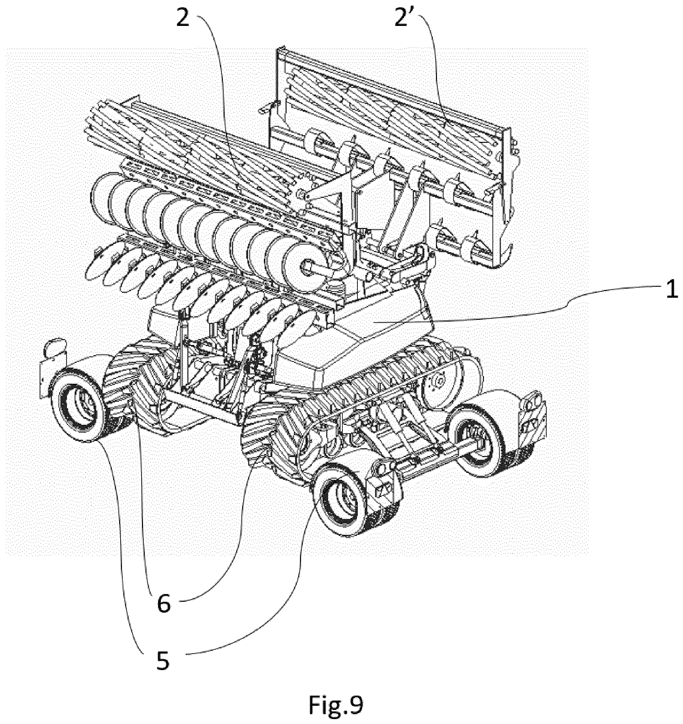

Figure 9 is an example of an autonomous tractor suitable for autonomous transport over the road.

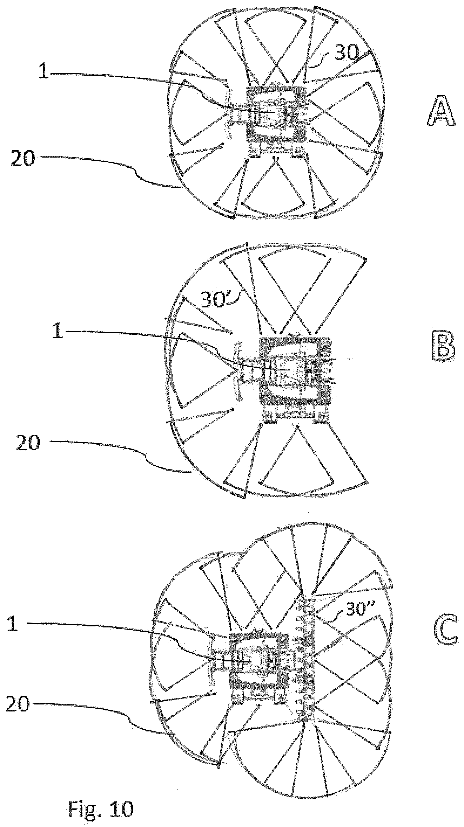

Figure 10 schematically shows the implantation of various sensors in line with the invention.

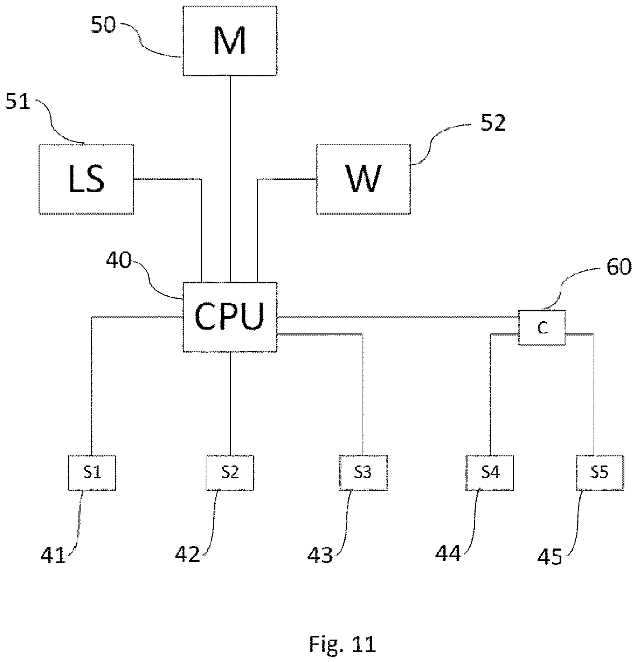

Figure 11 schematically depicts the arrangement of sensors and CPU.

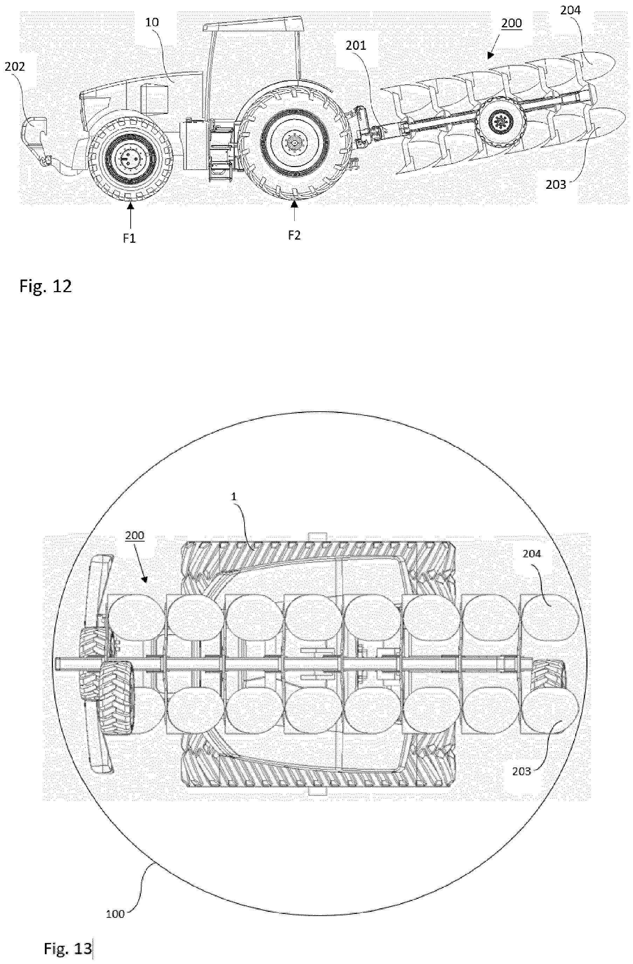

Figure 12 schematically depicts a prior art configuration of a tractor and a swivel plough.
Figure 13 schematically depicts the tractor/plough combination according to the present invention.

### Figure 1

Figure 1 is a schematic top plan view of an autonomous tractor 1 for autonomously crossing farmland. The tractor crosses the farmland in the direction indicated as X. At is trailing end, coupled to the tractor via common triangle coupler 3 is a power harrow 2. The triangle has standard dimensions and drive axle such that various common agricultural machines can be coupled to the tractor. During the autonomous crossing of the farmland in direction X, the power harrow rests on the land for cultivating it. The tractor has an internal engine (not depicted) which drives the wheels 6 and the power harrow. For making sure the tractor is not principally hindered by any obstacles, the front side is provided with several sensors (not depicted) for detection of such obstacles when crossing the farmland. Laterally, the tractor is provided with a drawbar 4 and opposite thereof, with a second set of wheels 5. The drawbar and second set of wheels are not in use when the tractor crosses the farmland. They serve to help in transporting the tractor over the road. To enable thus, the drawbar can be used for connecting the tractor to a road haulage truck for transport of the tractor over the road, whereas the set of wheels 5 acts to provide rolling support. According to the invention, the direction of movement of the tractor for crossing the farmland (X) is perpendicular to the direction of movement when the tractor is transported over the road. The latter direction is indicated in figure 2.

### Figure 2

Figure 2 is a schematic top plan view of the autonomous tractor of figure 1 with the agricultural machine 2 in an elevated position. The coupler 3 is operable to move the coupled harrow between two positions (not excluding that the harrow can be put in any intermediate position), the first of which is the position lateral to the tractor for cultivating the land (as depicted in figures 1 and 3), and the second of which is a position above the tractor. This is the position as depicted in figure 2. A corresponding side view is shown in figure 4. As a result of taking the second position above the tractor, the second position coincides with the footprint of the tractor, i.e. the harrow's footprint overlaps completely (over the width of the tractor) with the footprint of the tractor. The result is that the combination in the direction of transport indicated as Y, is not wider than the width of the tractor itself.

### Figure 3

Figure 3 is a schematic side view of the tractor, corresponding to figure 1. In this side view the set of wheels 5 and the drawbar 4 are arranged in an elevated position so as to not interfere with the autonomous operation of the tractor.

### Figure 4

Figure 4 is a schematic side view of the tractor, corresponding to figure 2. In this side view the set of wheels 5 and the drawbar 4 are arranged in a lowered position so as to be able and support the road haulage of the tractor. The drawbar is used for connecting to a human operated truck. The wheels 5 serve to provide a rolling support of the tractor during road haulage (see figures 6, 7 and 8 for a combination of autonomous tractors with a human operated truck for road haulage).

### Figure 5

Figure 5, consisting of figure 5A and 5B, provide a schematic view of an alternative autonomous tractor 1. In figure 5A the tractor is shown in "cultivation" mode with a front end and trailing end agricultural machines 2 and 2' attached. Drawbar 4 and wheels 5 are in elevated position so as to not interfere with the cultivation of the farmland. Figure 5B shows the same tractor with the machines 2 and 2' in elevated position, and the drawbar 4 and wheels 5 in lowered position enabling road haulage. As can be seen, the advantage of a lack of a cabin for a human operator is that the machines can be elevated to a completely upright position, leading to the smallest width possible during road haulage and also, leading to less stringent mechanical demands for the couplers: the forces exerted on these couplers during transport are much smaller when the machines are right above the couplers, when compared to a situation wherein the machines are coupled under an angle of for example 45°.

### Figure 6

Figure 6 is a schematic view of two autonomous tractors 1 as depicted in figure 5, pulled by human operated tractor 10 serving as a road haulage truck for transport over the road. Both tractors 1 have the agricultural machines elevated to an upright position to provide for the smallest width possible.

### Figure 7

Figure 7 is a schematic view of an alternative arrangement of the combination as shown in figure 6. In this embodiment, the tractor 10 pulls two autonomous tractors 1 and 1'to which different agricultural machines are coupled.

### Figure 8

Figure 8 is a schematic view of a further alternative arrangement of the combination as shown in figures 6 and 7. In this combination the drawbars 4 and wheels set 5 are arranged on opposite sides of each tractor (when compared to each other), providing the advantage that the agricultural machines during transport over the road are present at opposite sides of each tractor. This decreases the risk that the machines mechanically interfere with the road transport.

### Figure 9

Figure 9 schematically depicts an example of an autonomous tractor suitable for autonomous transport over the road. In this embodiment at least one of the axles of wheels 5 is actuated by the motor of the tractor, and this axle, and/or the other one, may be arranged as a steering axle that can be used to navigate the road. The technology for the autonomous transport/driving of this tractor over the road may be the same as present day technology used for autonomous cars.

### Figure 10

Figure 10, comprising sub-figures 10A, 10B and 10C schematically shows the implantation of various sensors in line with the invention. In figure 10A an autonomous tractor without an agricultural machine coupled thereto is depicted. The sensors (not shown) create a virtual cage 30 in an area 20. If an obstacle, for example a person, is sensed in the virtual cage 30, the CPU will react to control the movement of the tractor to avoid overriding the person, e.g. by stopping the machine, or by (anticipating) slowing down and at the same time providing a light and sound signal to warn the person of the vicinity of the tractor.

Figure 10B shows the situation wherein an agricultural machine 2 is connected to the tractor (the machine 2 itself is not depicted in figure 10B for reasons of clarity; see figure 10C for the actual machine 2 being present). In line with the invention, as soon as the machine is (electronically) connected to the CPU of the tractor (which maybe via a hardware connection using a connector/ISOBUS etc., or via a wireless connection) the CPU is provided automatically with data regarding the location of each of the one or more additional sensors on the agricultural machine and one or more specifications of each of these one or more additional sensors. In this embodiment, the CPU automatically shuts off the sensors of the tractor that sense the agricultural machine leading to adjusted virtual cage 30' (as depicted in Figure 10B). This virtual cage 30' is in fact the same cage as 30, minus the part facing the agricultural machine. Once connected, the CPU also automatically shuts on the sensors of the agricultural machine. This leads to the virtual cage 30" as depicted in Figure 10C. As a consequence, the combination of tractor and machine can operate with the combined sensors on the tractor and machine, in essence "seeing" the combination of the tractor and agricultural machine as one unit for crossing the farmland.

In practice it may be that several independent tractors will cross the same lot of farmland simultaneously to cultivate the land together. If so, it is important that the various tractors (plus machines) do not see each other as regular obstacles, which could lead to a situation that they react to each other, stop and don't continue to work. So as soon as various autonomous tractors are working close to each other there should be communication between the combinations about position, speed, and travel direction but also about dimensions implements have. The sensors can be useful in this respect.

Another aspect of the invention is that the tractors may be able to distinguish between (curious) spectators and an operator. Where the machine has to be 100% safety proof for general public, the operator sometimes has to observe the tractor and/or machine closely to real time adjust and verify the result of the cultivation job executed by the machine. This could for example lead to a system wherein if a common spectator is sensed within 10 meters of the tractor at a certain speed, the machine starts providing light and sounds signals, or even stops if the spectator is within 5 meters of the tractor, whereas for an operator such actions are only undertaken at 3 and 1 meter respectively when the tractor travels at the same speed. An operator could for example be recognised via wireless communication between the CPU of the tractor and a smartphone, or other hand held device of the operator.

### Figure 11

Figure 11 schematically depicts the arrangement of sensors 41 through 45 and CPU 40 in a combination of a tractor and agricultural machine according to the invention. The sensors 41, 42 and 43 are part of the tractor and have a fixed connection with the CPU 40. They provide an output signal to the CPU, which on its turn controls and actuated the motor 50 of the tractor ("M"), a light and sound warming system 51 ("LS") and/or a (virtual) steering wheel 52 ("W"). The sensors 44 and 45 are part of the agricultural machine and connected to the CPU via connector 60.

### Figure 12

Figure 12 schematically depicts a prior art configuration of a human operated tractor 10 and a swivel plough 200, having a first mouldboard 203 and a second mouldboard 204.. In the shown position, the plough is lifted to enable turning around its axle 201. During this action, there is a very heavy force F2 on the back wheels of the tractor (directed downwards), while the force F1 on the front wheels is very low. F1 can even be negative, leading to a lifting force. Therefore, many prior art tractors have front weight assembly 202 to prevent the tractor from tilting when the plough 200 is lifted and turned around is axle. It is evident that the total space needed for the combined lifting/turning action and the turning of the tractor (to take an opposite driving direction) is quite large, typically 2-3 times the combined length of the tractor and plough, i.e. 4-6 times the length of the tractor 10 itself.

### Figure 13

Figure 13 schematically depicts the tractor/plough combination according to the present invention in a top plan view. As can be seen in figure 13, the swivel plough 200 on itself takes a position that corresponds to the position of the agricultural machine as depicted in figures 2, 5b, 7 and 9, albeit that in this case the tractor 1 is still in its operating mode to autonomously cross the farmland. The situation that is depicted in figure 13, is a position that can be taken after the tractor 1 has made one furrow across the farmland, extending from a first location to a second location. Upon arrival at the second location, as depicted in figure 13, the swivel plough 200 is lifted and brought in an upright position right above the tractor 1. This is the situation as depicted in Figure 13. Thereafter the swivel plough is rotated around its axle to bring the second mouldboard in the position the first mouldboard had relative to the tractor when crossing the farmland from the first location to the second location. Thereafter the plough is brought back to its position to plough the farmland. The tractor 1 will then cross the farmland with the tractor and swivel plough along the previously made furrow, moving in opposite direction (i.e. in essence from the second location to the first location), while the second mouldboard is in contact with the farmland to turn its soil, and the first mouldboard is raised above the farmland.

One of the advantages is, apart from the lesser mechanical constraints, that the total space 100 needed for the combined lifting/turning action and the turning of the tractor is considerably smaller, typically no more than 1-2 times the length of the tractor 1 itself.

## Claims

1. A method for ploughing farmland, using an autonomous tractor and connected thereto a swivel plough comprising a first and a second mouldboard, extending in parallel and positioned on opposite sides of a common axle, the method comprising:
- crossing the farmland with the tractor and swivel plough connected thereto along a line that extends in a longitudinal direction from a first location on the farmland to a second location on the farmland, while the first mouldboard is in contact with the farmland to turn its soil, and the second mouldboard is raised above the farmland,
- adjacent the second location, lifting the swivel plough such that the first mouldboard is raised above the farmland and thereafter rotating the swivel plough around the axle to bring the second mouldboard in the position the first mouldboard had relative to the tractor when crossing the farmland from the first location to the second location,
- crossing the farmland with the tractor and swivel plough connected thereto adjacent the said line, moving in opposite direction while the second mouldboard is in contact with the farmland to turn its soil, and the first mouldboard is raised above the farmland,
**characterised in that** the swivel plough is rotated when the axle is in an upright position.

2. A method according to claim 1, **characterised in that** the swivel plough is rotated when the axle forms an angle with the farmland of between 80 and 100°.

3. A method according to any of the preceding claims **characterised in that** the tractor comprises a connector for connecting the tractor to a road haulage truck for transport of the tractor over the road, wherein the direction of movement of the tractor when crossing the farmland is perpendicular to the direction of movement when the tractor is transported over the road.

4. A method according to any of the preceding claims, **characterised in that** the tractor has a first set of wheels corresponding to the movement when crossing the farmland, and a second set of wheels corresponding to transport of the tractor over the road.

5. A method according to claim 4, **characterised in that** the second set of wheels is moved away from the farmland to prevent contact therewith when the tractor crosses the farmland.

6. A method according to any of the preceding claims, **characterised in that** the tractor comprising one or more sensors for detection of obstacles when crossing the farmland, a coupler for coupling to the tractor an agricultural machine alternative to the swivel plough.

7. A method according to claim 6, wherein the tractor comprises a central processing unit (CPU) for receiving input signals from the one or more sensors and for controlling the movement of the tractor based on the input signals in order to avoid an obstacle present on the farmland, wherein each of the agricultural machine and the swivel plough comprises one or more additional sensors for detection of the obstacles, **characterised in that** the coupling of the agricultural machine or swivel plough comprises operatively connecting the one or more additional sensors to the CPU and automatically providing data to the CPU regarding the location of each of the one or more additional sensors on the agricultural machine or swivel plough and one or more specifications of each of these one or more additional sensors.

8. An autonomous tractor for autonomously crossing farmland, the tractor comprising connected thereto a swivel plough comprising a first and a second mouldboard, extending in parallel and positioned on opposite sites on the same axle, the tractor being arranged for lifting the swivel plough and rotating the swivel plough around its axle to switch the position of the second mouldboard with that of the first mouldboard, **characterised in that** the autonomous tractor with the swivel plough connected thereto is configured such that the swivel is rotated when the axle is in an upright position when the autonomous tractor with the swivel plough connected thereto is used according to the method of claim 1.

9. An autonomous tractor according to claim 8, **characterised in that** the tractor is arranged such that the axle can be put in a position wherein it forms an angle with the farmland of between 80 and 100°.

10. An autonomous tractor according to claim 8 or 9, **characterised in that** comprises a connector for connecting the tractor to a road haulage truck for transport of the tractor over the road, wherein the direction of movement of the tractor when crossing the farmland is perpendicular to the direction of movement when the tractor is transported over the road.

## Patentansprüche

1. Verfahren zum Pflügen von landwirtschaftlicher Nutzfläche, unter Verwendung eines autonomen Traktors, und einen dazu angekoppelten Kipppflug, umfassend ein erstes und ein zweites Streichblech, die sich parallel erstrecken und auf gegenüberliegenden Seiten einer gemeinsamen Achse positioniert sind, das Verfahren umfassend:
- Queren der landwirtschaftlichen Nutzfläche mit dem Traktor und dem dazu angekoppelten Kipppflug entlang einer Linie, die sich in einer Längsrichtung von einer ersten Stelle auf der landwirtschaftlichen Nutzfläche zu einer zweiten Stelle auf der landwirtschaftlichen Nutzfläche erstreckt, während das erste Streichblech mit der landwirtschaftlichen Nutzfläche in Berührung ist, um ihre Erde umzuwälzen, und das zweite Streichblech über der landwirtschaftlichen Nutzfläche angehoben ist,
- angrenzend an die zweite Stelle, Anheben des Kipppflugs, derart, dass das erste Streichblech über der landwirtschaftlichen Nutzfläche angehoben wird, und danach Drehen des Kipppflugs um die Achse, um das zweite Streichblech in die Position zu bringen, die das erste Streichblech relativ zu dem Traktor beim Queren der landwirtschaftlichen Nutzfläche von der ersten Stelle zu der zweiten Stelle hatte,
- Queren der landwirtschaftlichen Nutzfläche mit dem Traktor und dem dazu angekoppelten Kipppflug angrenzend zu der Linie, wobei ein Bewegen in entgegengesetzter Richtung erfolgt, während das zweite Streichblech mit der landwirtschaftlichen Nutzfläche in Berührung ist, um ihre Erde umzuwälzen, und das erste Streichblech über der landwirtschaftlichen Nutzfläche angehoben ist,
**dadurch gekennzeichnet, dass** der Kipppflug gedreht wird, wenn sich die Achse in einer aufrechten Position befindet.

2. Verfahren nach Anspruch 1, **dadurch gekennzeichnet, dass** der Kipppflug gedreht wird, wenn die Achse einen Winkel mit der landwirtschaftlichen Nutzfläche zwischen 80 und 100° bildet.

3. Verfahren nach einem der vorstehenden Ansprüche
**dadurch gekennzeichnet, dass** der Traktor eine Kupplung zum Ankoppeln des Traktors an einen Lastkraftwagen für Straßengüterverkehr für den Transport des Traktors über die Straße umfasst, wobei die Bewegungsrichtung des Traktors beim Queren der landwirtschaftlichen Nutzfläche senkrecht zu der Bewegungsrichtung ist, wenn der Traktor über die Straße transportiert wird.

4. Verfahren nach einem der vorstehenden Ansprüche,
**dadurch gekennzeichnet, dass** der Traktor einen ersten Satz von Rädern, die der Bewegung beim Queren der landwirtschaftlichen Nutzfläche entsprechen, und einen zweiten Satz von Rädern aufweist, die dem Transport des Traktors über die Straße entsprechen.

5. Verfahren nach Anspruch 4, **dadurch gekennzeichnet, dass** der zweite Satz von Rädern von der landwirtschaftlichen Nutzfläche weg bewegt wird, um eine Berührung damit zu vermeiden, wenn der Traktor die landwirtschaftliche Nutzfläche quert.

6. Verfahren nach einem der vorstehenden Ansprüche,
**dadurch gekennzeichnet, dass** der Traktor einen oder mehrere Sensoren zum Erfassen von Hindernissen beim Queren der landwirtschaftlichen Nutzfläche, einen Koppler zum Koppeln einer zu dem Kipppflug alternativen landwirtschaftlichen Maschine an den Traktor umfasst.

7. Verfahren nach Anspruch 6, wobei der Traktor eine zentrale Verarbeitungseinheit (CPU) zum Empfangen von Eingangssignalen von dem einen oder den mehreren Sensoren und zum Steuern der Bewegung des Traktors basierend auf den Eingangssignalen umfasst, um ein Hindernis, das auf der landwirtschaftlichen Nutzfläche vorhanden ist, zu vermeiden, wobei jedes von der landwirtschaftlichen Maschine und dem Kipppflug einen oder mehrere zusätzliche Sensoren für die Erfassung der Hindernisse umfasst,
**dadurch gekennzeichnet, dass** das Koppeln der landwirtschaftlichen Maschine oder des Kipppflugs ein Wirkverbinden des einen oder der mehreren zusätzlichen Sensoren mit der CPU und ein automatisches Bereitstellen von Daten an die CPU bezüglich der Stelle von jedem des einen oder der mehreren zusätzlichen Sensoren auf der landwirtschaftlichen Maschine oder dem Kipppflug und einer oder mehrerer Spezifikationen von jedem dieses einen oder dieser mehreren zusätzlichen Sensoren umfasst.

8. Autonomer Traktor zum autonomen Queren von landwirtschaftlicher Nutzfläche, der Traktor umfassend einen dazu angekoppelten Kipppflug, umfassend ein erstes und ein zweites Streichblech, die sich parallel erstrecken und auf gegenüberliegenden Seiten der gleichen Achse positioniert sind, wobei der Traktor zum Anheben des Kipppflugs und Drehen des Kipppflugs um seine Achse angeordnet ist, um die Position des zweiten Streichblechs mit der des ersten Streichblechs zu vertauschen, **dadurch gekennzeichnet, dass** der autonome Traktor mit dem dazu angekoppelten Kipppflug derart konfiguriert ist, dass das Drehlager gedreht wird, wenn die Achse in einer aufrechten Position ist, wenn der autonome Traktor mit dem dazu angekoppelten Kipppflug gemäß dem Verfahren nach Anspruch 1 verwendet wird.

9. Autonomer Traktor nach Anspruch 8, **dadurch gekennzeichnet, dass** der Traktor derart angeordnet ist, dass die Achse in eine Position gebracht werden kann, in der sie einen Winkel mit der landwirtschaftlichen Nutzfläche zwischen 80 und 100° bildet.

10. Autonomer Traktor nach Anspruch 8 oder 9,
**dadurch gekennzeichnet, dass** er eine Kupplung zum Ankoppeln des Traktors an einen Lastkraftwagen für Straßengüterverkehr für den Transport des Traktors über die Straße umfasst, wobei die Bewegungsrichtung des Traktors beim Queren der landwirtschaftlichen Nutzfläche senkrecht zu der Bewegungsrichtung ist, wenn der Traktor über die Straße transportiert wird.

## Revendications

1. Procédé pour labourer des terres agricoles, à l'aide d'un tracteur autonome et relié à celui-ci, une charrue réversible comprenant un premier et un second versoir, s'étendant en parallèle et positionnés sur des côtés opposés d'un essieu commun, le procédé comprenant :
- la traversée de terres agricoles avec le tracteur et la charrue réversible reliée à celui-ci le long d'une ligne qui s'étend dans une direction longitudinale à partir d'un premier emplacement sur les terres agricoles à un second emplacement sur les terres agricoles, tandis que le premier versoir est en contact avec les terres agricoles pour retourner son sol, et que le second versoir est relevé au-dessus des terres agricoles,
- adjacent au second emplacement, le soulèvement de la charrue réversible de telle sorte que le premier versoir est élevé au-dessus des terres agricoles et par la suite, la rotation de la charrue réversible autour de l'essieu pour amener le second versoir dans la position où se trouvait le premier versoir par rapport au tracteur lors de
- la traversée des terres agricoles du premier emplacement au second emplacement, traversant les terres agricoles avec le tracteur et la charrue réversible reliée à celui-ci adjacent à ladite ligne, se déplaçant dans une direction opposée alors que le deuxième versoir est en contact avec les terres agricoles pour retourner son sol, et le premier versoir est levé au-dessus des terres agricoles,
**caractérisé en ce que** la charrue réversible est tournée lorsque l'essieu est dans une position verticale.

2. Procédé selon la revendication 1, **caractérisé en ce que** la charrue réversible est mise en rotation lorsque l'essieu forme un angle avec les terres agricoles compris entre 80 et 100°.

3. Procédé selon l'une quelconque des revendications précédentes **caractérisé en ce que** le tracteur comprend un connecteur pour relier le tracteur à un camion routier pour le transport du tracteur sur la route, dans lequel la direction de déplacement du tracteur lors de la traversée des terres agricoles est perpendiculaire à la direction de déplacement lorsque le tracteur est transporté sur la route.

4. Procédé selon l'une quelconque des revendications précédentes, **caractérisé en ce que** le tracteur présente un premier ensemble de roues correspondant au déplacement lors de la traversée des terres agricoles, et un second ensemble de roues correspondant au transport du tracteur sur la route.

5. Procédé selon la revendication 4, **caractérisé en ce que** le second ensemble de roues est agencé pour pouvoir être déplacé à l'écart des terres agricoles pour empêcher un contact avec celui-ci lorsque le tracteur traverse les terres agricoles.

6. Procédé selon l'une quelconque des revendications précédentes, **caractérisé en ce que** le tracteur comprenant un ou plusieurs capteurs pour détecter des obstacles lors de la traversée de terres agricoles, un coupleur pour le couplage au tracteur d'une machine agricole autre que la charrue réversible.

7. Procédé selon la revendication 6, dans lequel le tracteur comprend une unité centrale de traitement (CPU) permettant de recevoir des signaux d'entrée provenant du ou des capteurs et de commander le déplacement du tracteur en fonction des signaux d'entrée afin d'éviter une obstacle présent sur la terre agricole, dans lequel chacune de la machine agricole et de la charrue réversible comprenant un ou plusieurs capteurs supplémentaires pour la détection des obstacles, **caractérisé en ce que** l'accouplement de la machine agricole ou de la charrue réversible comprend une connexion fonctionnelle du ou des capteurs supplémentaires à la CPU et la fourniture automatique de données à la CPU concernant la localisation de chacun du ou des capteurs supplémentaires sur la machine agricole ou la charrue réversible et une ou plusieurs spécifications de chacun du ou des capteurs supplémentaires.

8. Tracteur autonome pour traverser de manière autonome les terres agricoles, le tracteur comprenant relié à celui-ci une charrue réversible comprenant un premier et un second versoir, s'étendant en parallèle et positionnés sur des sites opposés sur le même essieu, le tracteur étant agencé pour soulever la charrue réversible et faire tourner la charrue réversible autour de son essieu pour commuter la position du second versoir avec celui du premier versoir ; **caractérisé en ce que** le tracteur autonome avec la charrue réversible reliée à celui-ci est configuré de telle sorte que le pivot est tourné lorsque l'essieu est dans une position verticale lorsque le tracteur autonome avec la charrue réversible reliée à celui-ci est utilisé selon le procédé de la revendication 1.

9. Tracteur autonome selon la revendication 8, **caractérisé en ce que** le tracteur est agencé de telle sorte que l'essieu puisse être mis en position dans lequel il forme un angle avec les terres agricoles compris entre 80 et 100°.

10. Tracteur autonome selon la revendication 8 ou 9, **caractérisé en ce qu'il** comprend un connecteur pour relier le tracteur à un camion routier pour le transport du tracteur sur la route, dans lequel la direction de déplacement du tracteur lors de la traversée de terres agricoles est perpendiculaire à la direction de déplacement lorsque le tracteur est transporté sur la route.
